# EUROPÄISCHE PATENTANMELDUNG

(11) **EP 4 283 161 A1**
(43) Veröffentlichungstag der Anmeldung: **29.11.2023**
(21) Anmeldenummer: 22175810.5
(22) Anmeldetag: 27.05.2022
(51) Int. Cl.: F16H 1/28, F16H 57/023, F16H 1/46, F16H 57/02

(54) **PLANETENGETRIEBE MIT VERBESSERTEM LAGERFLANSCH**

(71) Anmelder: maxon international ag, 6072 Sachseln (CH)
(72) Erfinder: SCHULER, Florian, 77955 Ettenheim (DE); WESTHOLT, Stefan, 79350 Sexau (DE); FREY, Dominik, 79350 Sexau (DE)
(74) Vertreter: Grünecker Patent- und Rechtsanwälte PartG mbB

(57) **Zusammenfassung**

Die vorliegende Erfindung betrifft ein Planetengetriebe umfassend ein Hohlrad, mindestens eine Getriebestufe sowie einen Lagerflansch zur Lagerung einer Abtriebswelle. Aufgabe der vorliegenden Erfindung ist es, ein derartiges Planetengetriebe bereitzustellen, dass die aus dem Stand der Technik bekannten Getriebe verbessert und insbesondere eine kostengünstige und einfach herzustellende Lösung für die Lagerung der Abtriebswelle des Getriebes bereitstellt. Hierzu ist erfindungsgemäß vorgesehen, dass der Lagerflansch mehrteilig ausgebildet ist und mindestens ein erstes, hohlradseitiges Lagerflanschteil und ein zweites, abtriebsseitiges Lagerflanschteil aufweist, wobei das erste Lagerflanschteil einteilig mit dem Hohlrad ausgebildet ist und das zweite Lagerflanschteil als separates Bauteil ausgebildet ist und drehfest mit dem ersten Lagerflanschteil verbunden ist.

## Beschreibung

Die vorliegende Patentanmeldung betrifft ein Planetengetriebe umfassend ein Hohlrad, mindestens eine Getriebestufe sowie einen Lagerflansch zur Lagerung einer Abtriebswelle.

Eine wesentliche Aufgabe eines derartigen Planetengetriebes besteht darin, eine sichere Lagerung der Abtriebswelle des Getriebes sicherzustellen. Insbesondere müssen auch auf die Abtriebswelle wirkende Radialkräfte aufgenommen werden.

Aus der WO 2021/075217 A1 ist ein Elektromotor mit einem daran angebrachten Planetengetriebe bekannt. Dazu ist ein Motorhalter vorgesehen, der an dem Elektromotor angeschraubt ist. Das Hohlrad des Planetengetriebes ist über eine Steckverbindung mit dem Motorhalter verbunden. Auf der dem Motor der gegenüberliegenden Seite des Hohlrades ist ein einteiliger Lagerhalter angeordnet, in dem ein Lager für die Ausgangswelle des Planetengetriebes aufgenommen ist. Der Lagerhalter ist ebenfalls über eine Steckverbindung mit dem Planetengetriebe verbunden ist. Zudem sind der Motorhalter, dass Hohlrad und der Lagerhalter mittels mehrerer Schrauben miteinander verschraubt.

Die DE 10 2018 204 051 A1 zeigt ebenfalls einen Getriebemotor mit einem Elektromotor und einem Planetengetriebe, das mittels Befestigungsschrauben an dem Elektromotor befestigt ist. Das Hohlrad des Planetengetriebes bildet einen Teil des Getriebegehäuses aus. Zudem weist das Planetengetriebe einen einstückig mit dem Hohlrad ausgebildeten Lagerschild auf. Die Ausgangswelle ist in zwei Gleitlager gelagert, die mit einem axialen Abstand voneinander in dem Lagerschild aufgenommen sind.

Aufgabe der vorliegenden Erfindung ist es, ein wie oben beschriebenes Planetengetriebe bereitzustellen, dass die aus dem Stand der Technik bekannten Getriebe verbessert und insbesondere eine kostengünstige und einfach herzustellende Lösung für die Lagerung der Abtriebswelle des Getriebes bereitstellt, unabhängig von den im Planetengetriebe verwendeten Werkstoffen.

Diese Aufgabe wird gelöst durch die Merkmale des unabhängigen Anspruchs 1. Demnach liegt bei einem Planetengetriebe umfassend ein Hohlrad, mindestens eine Getriebestufe sowie einen Lagerflansch zur Lagerung einer Abtriebswelle dann eine erfindungsgemäße Lösung der Aufgabe vor, wenn der Lagerflansch mehrteilig ausgebildet ist und mindestens ein erstes, hohlradseitiges Lagerflanschteil und ein zweites, abtriebsseitiges Lagerflanschteil aufweist, wobei das erste, hohlradseitige Lagerflanschteil einteilig mit dem Hohlrad ausgebildet ist und das zweite, abtriebsseitige Lagerflanschteil als separates Bauteil ausgebildet ist und drehfest mit dem ersten, hohlradseitigen Lagerflanschteil verbunden ist.

Durch die zweiteilige Ausgestaltung des Lagerflansches wird sichergestellt, dass zwei zur Lagerung der Abtriebswelle vorgesehene Lager in einem gewissen axialen Abstand zueinander angeordnet werden können. Dadurch ist eine Aufnahme von Radialkräften auf der Abtriebswelle möglich. Durch die zweiteilige bzw. mehrteilige Ausgestaltung des Lagerflansches können unterschiedliche Materialien für die beiden Lagerflanschteile verwendet werden. Dadurch sind diverse Materialkombinationen für die beiden Lagerflanschteile möglich. Dies führt u.a. zu Kosteneinsparungen, zudem können die beiden Lagerflanschteile einfacher gemäß ihren unterschiedlichen Beanspruchungen und der erforderlichen Kraftaufnahme der beiden Bauteile ausgelegt werden.

Vorteilhafte Ausführungsformen der vorliegenden Erfindung sind Gegenstand der Unteransprüche.

In einer bevorzugten Ausführungsform der vorliegenden Erfindung kann vorgesehen sein, dass das Hohlrad gesintert ist. Dadurch dass das Hohlrad aus einem Sintermaterial ist, ist eine kostengünstige Herstellung bei gleichzeitig hoher Präzision möglich. Allerdings können gesinterte Metall-Bauteile nur eine begrenzte maximale Länge aufweisen. Durch die zweiteilige Ausgestaltung des Lagerflansches wird auch bei einem Hohlrad aus Sintermaterial eine Lagerung der Abtriebswelle mittels zwei in einem gewissen bzw. vorgegebenem axialen Abstand zueinander angeordneten Lagern ermöglicht.

Vorteilhafterweise kann ferner vorgesehen sein, dass das erste hohlradseitige Lagerflanschteil und das zweite abtriebsseitige Lagerflanschteil mittels einer Verschraubung drehfest miteinander verbunden sind. Eine Schraubverbindung ist mit praktisch allen Materialen möglich. Insbesondere bei Sinterbauteilen sind alternative Verbindungsverfahren wie Schweißen, Kleben oder Pressen nachteilig und aufwendig in der Ausführung. Zudem kann eine geschraubte Verbindung rückstandsfrei getrennt und wieder zusammengeführt werden.

Um ein Lösen der Schraubverbindung der beiden Lagerflanschteile von außen zu verhindern, kann vorgesehen sein, dass in dem ersten, hohlradseitigen Lagerflanschteil mindestens eine Durchgangsbohrung ausgebildet ist und in dem zweiten, abtriebsseitigen Lagerflanschteil mindestens eine zur Aufnahme einer Schraube mit der Durchgangsbohrung zusammenwirkende Sacklochbohrung ausgebildet ist. In einer alternativen Ausführungsvariante kann die Bohrung in dem zweiten, abtriebsseitigen Lagerflanschteil ebenfalls als Durchgangsbohrung ausgeführt sein. Für die Verschraubung wird die Schraube also durch die Durchgangsbohrung in dem hohlradseitigen Lagerflanschteil durchgesteckt und in die Sacklochbohrung in dem zweiten, abtriebsseitigen Lagerflanschteil eingeschraubt. Die Schraube bzw. die Schrauben sind also von innen, von der Hohlradseite, nach außen, zur Abtriebsseite hin, orientiert. Ein Lösen der Verbindung zwischen den beiden Lagerflanschteilen ist im montierten Zustand des Planetengetriebes von außen nicht möglich. Dennoch ist es optional möglich, das Getriebe zu demontieren und die Verschraubung von innen im Hohlrad zerstörungsfrei zu lösen. In einer einfachen Ausgestaltung der Verschraubung kann vorzugsweise ferner vorgesehen sein, dass die Sacklochbohrung ein Gewinde aufweist. Alternativ ist es auch möglich, dass die Sacklochbohrung ohne Gewinde ausgeführt ist. In diesem Fall sind die Schrauben selbstfurchend ausgebildet.

Um eine sichere Lagerung der Abtriebswelle in dem Lagerflansch zu ermöglichen kann ferner vorgesehen sein, dass der Lagerflansch einen ersten, hohlradseitigen Lagersitz und einen zweiten, abtriebsseitigen Lagersitz aufweist, wobei der erste Lagersitz und der zweite Lagersitz in axialer Richtung der Abtriebswelle beabstandet zueinander angeordnet sind.

Dabei ist vorzugsweise der erste, hohlradseitige Lagersitz sowohl in dem ersten, hohlradseitigen Lagerflanschteil als auch in dem zweiten, abtriebsseitigen Lagerflanschteil ausgebildet ist. Vorzugsweise bildet das zweite, abtriebsseitigen Lagerflanschteil einen Anschlag für das im ersten Lagersitz angeordnete Lager aus. Hierdurch können Herstellungstoleranzen der beiden Lagerflanschteile einfach ausgeglichen werden. Es ist eine einfache Bearbeitung des Lagersitzes möglich. Vorhandene Herstellungstoleranzen des Lagersitzes im ersten hohlradseitigen Lagerflanschteils und/oder am zweiten, abtriebsseitigen Lagerflanschteil können bevorzugt durch eine Nachbearbeitung, wie beispielsweise Drehen, Bohren, Fräsen oder Schleifen verringert werden.

Der zweite, abtriebsseitige Lagersitz ist vorzugsweise in dem zweiten, abtriebsseitigen Lagerflanschteil ausgebildet ist. Da die beiden Lagersitze auf zwei unterschiedlichen Bauteilen, den beiden Lagerflanschteilen, ausgebildet sind, ist eine gute Bearbeitung der beiden Lagersitze möglich.

In noch einer weiteren vorteilhaften Ausführungsform ist vorgesehen, dass an dem ersten, hohlradseitigen Lagersitz ein erstes, hohlradseitiges Lager für die Abtriebswelle angeordnet ist und an dem zweiten, abtriebsseitigen Lagersitz ein zweites, abtriebsseitiges Lager für die Abtriebswelle angeordnet ist, wobei das erste Lager und das zweite Lager so ausgebildet sind, dass insbesondere Radialkräfte durch das zweite, abtriebsseitige Lager aufgenommen werden. Hierdurch kann das erste, hohlradseitige Lager kleiner ausgebildet sein als das zweite, abtriebsseitige Lager. Dadurch ist es möglich, dass die Schraubverbindung zwischen den beiden Lagerflanschteilen radial zwischen dem ersten, hohlradseitigen Lager und dem Hohlraddurchmesser angeordnet ist. Auf diese Weise ist es trotz der auf der Abtriebsseite nötigen Lagerung und der drehmomentbedingt stärkeren Abtriebswelle möglich, auch bei kleinen Getrieben unter 100 mm Durchmesser den nötigen Bauraum zu finden, um eine zusätzliche Verschraubung vorzusehen.

Noch eine weitere vorteilhafte Ausführungsform sieht vor, dass das erste, hohlradseitige Lager einen kleineren Durchmesser aufweist als das zweite, abtriebsseitige Lager. Die Verschraubung kann daher im Inneren des Hohlrades vorgesehen werden, sodass der Bauraum im Außenumfang des Hohlraums reduziert werden kann, wodurch wiederum ein größeres Hohlrad mit einer größeren Untersetzung möglich ist.

In einer weiteren Ausgestaltung kann das Planetengetriebe mehrstufig ausgebildet sein, wobei das Hohlrad mindestens die ersten beiden abtriebsseitigen Getriebestufen überdeckt. Durch ein mehrstufiges Getriebe kann eine höhere Untersetzung erreicht werden.

Um eine besonders kompakte Ausgestaltung des Planetengetriebes zu erreichen, kann vorgesehen sein, dass das Hohlrad einen Teil des Getriebegehäuses ausbildet.

Vorteilhafterweise kann ferner die mindestens eine Durchgangsbohrung in dem ersten, hohlradseitigen Lagerflanschteil mit einer Stufe versehen sein, wobei die Durchgangsbohrung hohlradseitig einen größeren Durchmesser aufweist. Dadurch kann ein Schraubenkopf der Schraube axial innerhalb der Durchgangsbohrung im ersten, hohlradseitigen Lagerflanschteil aufgenommen werden und im Wesentlichen axial bündig mit der hohlradseitigen Stirnseite des Lagerflansches abschließen. Hierdurch wird vermieden, dass zusätzlicher Bauraum für den Schraubenkopf benötigt wird.

Vorzugsweise ist zwischen dem ersten, hohlradseitigen Lagerflanschteil und dem zweiten, abtriebsseitigen Lagerflanschteil eine Dichtung angeordnet. Die Dichtung ist bevorzugt als O-Ring ausgeführt.

In noch einer weiteren vorteilhaften Ausführungsform kann vorgesehen sein, dass das zweite, abtriebsseitige Lagerflanschteil aus Aluminium ausgebildet ist. Dies führt zu Vorteilen hinsichtlich der Kosten und des Gewichts des Planetengetriebes

Um eine sichere Verbindung zwischen den beiden Lagerflanschteil zu erhalten, kann vorgesehen werden, dass das erste, hohlradseitige Lagerflanschteil und das zweite, abtriebsseitige Lagerflanschteil mittels mindestens vier Schrauben, vorzugsweise mittels acht Schrauben, miteinander verschraubt sind.

Im Folgenden wird ein Ausführungsbeispiel der vorliegenden Erfindung anhand einer Zeichnung näher erläutert.

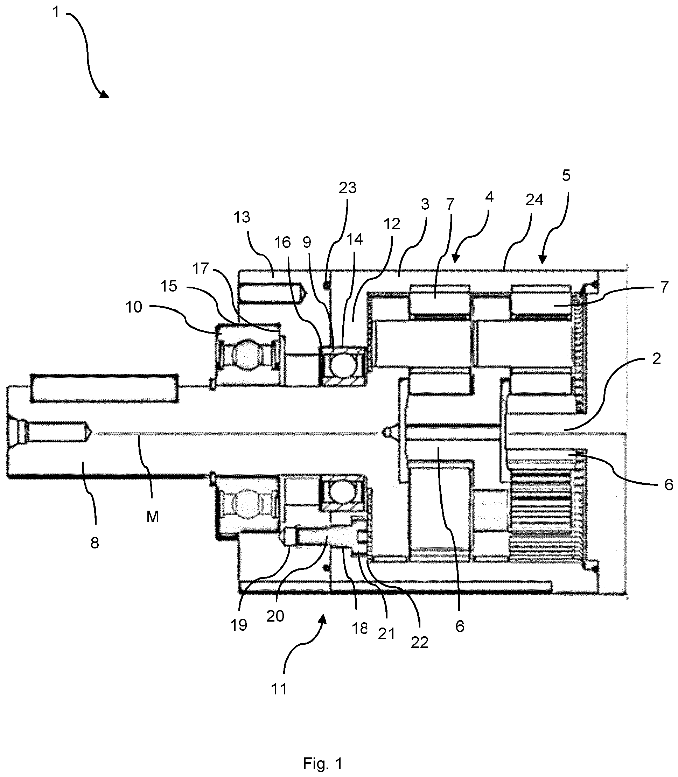

Fig. 1 zeigt einen Schnitt durch ein erfindungsgemäßes Planetengetriebe 1. Das Planetengetriebe 1 umfasst eine Eingangswelle 2 und ein Hohlrad 3, in dem eine erste Getriebestufe 4 und eine zweite Getriebestufe 5 angeordnet sind. Jede der beiden Getriebestufen 4, 5 umfasst ein zentrales Sonnenrad 6, das jeweils mit mindestens einem Planetenrad 7 in Eingriff steht. Jedes der Planetenräder 7 ist mit einer Außenverzahnung versehen, die in eine Innenverzahnung des Hohlrads 3 eingreift. Zudem weist das Planetengetriebe 1 eine Abtriebswelle 8 auf. Wie in Fig. 1 deutlich zu erkennen, bildet das Hohlrad 3 einen Teil des Getriebegehäuses 24 aus.

In Fig. 1 ist ein zweistufiges Planetengetriebe 1 gezeigt. Es ist auch möglich, dass Planetengetriebe als mehrstufiges Planetengetriebe auszuführen. Bei Planetengetriebe mit mehr als zwei Stufen überdeckt das Hohlrad mindestens die ersten beiden abtriebsseitigen Getriebestufen. Durch ein mehrstufiges Getriebe kann eine höhere Untersetzung erreicht werden.

Die Abtriebswelle 8 ist mittels eines ersten, hohlradseitigen Lagers 9 und eines zweiten, abtriebsseitigen Lagers 10 gelagert. Die beiden Lager 9, 10 sind in einem Lagerflansch 11 aufgenommen. Der Lagerflansch 11 ist mehrteilig, im dargestellten Ausführungsbeispiel zweiteilig, ausgebildet und umfasst ein erstes, hohlradseitiges Lagerflanschteil 12 und ein zweites, abtriebsseitiges Lagerflanschteil 13. Das erste, hohlradseitige Lagerflanschteil 12 ist einteilig mit dem Hohlrad 3 ausgebildet. Das Hohlrad 3 und das erste Lagerflanschteil 12 sind daher als ein Bauteil aus einem Stück ausgebildet. Wie in Fig. 1 dargestellt, erstreckt sich das erste Lagerflanschteil 12 ausgehend von der Umfangsfläche des Hohlrads 3 in Richtung zu einer zentralen Mittelachse M des Planetengetriebes 1. Dabei weist das Lagerflanschteil 12 eine mittige Aussparung zur Aufnahme der Abtriebswelle 8 und des ersten Lagers 9 auf. Das zweite Lagerflanschteil 13 ist als separates Bauteil ausgebildet. Vorzugsweise ist das zweite, abtriebsseitige Lagerflanschteil 13 aus Aluminium ausgeführt.

In dem Lagerflansch 11 sind zwei Lagersitze 14, 15 ausgebildet, ein erster hohlradseitiger Lagersitz 14 und ein zweiter abtriebsseitiger Lagersitz 15. Der erste, hohlradseitige Lagersitz 14 wird durch das erste, einteilig mit dem Hohlrad 3 ausgebildete Lagerflanschteil 12 und durch das zweite Lagerflanschteil 13 ausgebildet. Dabei ist in dem zweiten, abtriebsseitigen Lagerflanschteil 13 eine erste Schulter 16 ausgebildet, die einen axialen Anschlag für den Außenring des ersten, hohlradseitigen Lagers 9 ausbildet. Der zweite, abtriebsseitige Lagersitz 15 ist komplett in dem zweiten, abtriebsseitigen Lagerflanschteil 13 ausgebildet. In dem zweiten, abriebseitigen Lagerflanschteil 13 ist eine zweite Schulter 17 ausgebildet, die einen axialen Anschlag für den Außenring des zweiten, abtriebsseitigen Lagers 10 ausbildet. Die beiden Lager 9, 10 sind mit einem axialen Abstand zueinander angeordnet. Dadurch ist es möglich, Radialkräfte auf der Abtriebswelle 8 aufnehmen zu können.

Vorzugsweise ist das Hohlrad 3 mit dem einteilig damit ausgebildeten ersten Lagerflanschteil 12 aus einem Sintermaterial. Das Hohlrad 3 und das erste Lagerflanschteil 12 sind daher gesintert, d.h. in einem Sinterverfahren hergestellt. Gesinterte Metallbauteile können nur eine begrenzte maximale Länge aufweisen. Dadurch, dass der Lagerflansch 11 mehrteilig, im dargestellten Ausführungsbeispiel zweiteilig, ausgebildet ist, mit dem ersten, hohlradseitigen Lagerflanschteil 12, dass einteilig mit dem Hohlrad 3 ausgebildet ist, und dem zweiten, abtriebsseitigen Lagerflanschteil 13, das als separates Bauteil ausgebildet ist, ist es möglich ein gesintertes Hohlrad zu verwenden und dennoch den benötigten axialen Abstand zwischen den beiden im Lagerflansch 11 ausgebildeten Lagersitzen 14, 15 sicherzustellen.

Im dargestellten Ausführungsbeispiel sind die beiden Lager 9, 10 so ausgelegt, dass insbesondere Radialkräfte durch das zweite, abtriebsseitige Lager 10 aufgenommen werden. Dadurch kann das erste, hohlradseitige Lager 9 kleiner ausgebildet sein und weist einen geringeren Außendurchmesser auf als das zweite, abtriebsseitige Lager 10.

Das zweite, abtriebsseitige Lagerflanschteil 13 ist drehfest mit dem ersten, hohlradseitigen Lagerflanschteil 12 verbunden. Im dargestellten Ausführungsbeispiel ist die drehfeste Verbindung mittels einer Verschraubung realisiert. Dazu weist das erste, hohlradseitige Lagerflanschteil 12 mindestens eine Durchgangsbohrung 18 auf. In dem zweiten, abtriebsseitigen Lagerflanschteil 13 ist mindestens eine Sacklochbohrung 19 ausgebildet, die zur Aufnahme einer Schraube 20 mit der Durchgangsbohrung 18 in dem ersten Lagerflanschteil 12 zusammenwirkt. Die Vorteile einer geschraubten Verbindung liegen darin, dass die Verschraubung rückstandsfrei getrennt und wieder zusammengeführt werden kann. Zudem ist eine Schraubverbindung mit praktisch allen Materialen möglich. Alternative Verbindungsverfahren wie Schweißen, Kleben oder Pressen sind insbesondere bei Sinterbauteilen nachteilig und aufwendig in der Ausführung.

Vorzugsweise wird die Verschraubung mittels mindestens vier und bevorzugt mittels acht Schrauben erzeugt. Entsprechend weist dann das erste Lagerflanschteil 12 mindestens vier, bevorzugt acht Durchgangsbohrungen auf, das zweite Lagerflanschteil 12 mindestens vier, bevorzugt acht Sacklochbohrungen, die zur Aufnahme der Schrauben mit jeweils einer der Durchgangsbohrungen in dem ersten Lagerflanschteil 12 zusammenwirken. Die Schrauben 20 sind also von innen, das heißt von der Hohlradseite, nach außen, d.h. zur Abtriebsseite hin, orientiert. Die Schraubverbindung ist daher von außen nicht sichtbar bzw. nicht zugänglich. Dadurch ist ein Lösen der Schraubverbindung im montierten Zustand des Planetengetriebes 1 von außen nicht möglich. Es ist aber optional möglich, dass Planetengetriebe 1 zu demontieren und die Verschraubung von innen im Hohlrad zerstörungsfrei zu lösen.

Wie oben beschrieben, weist das erste, hohlradseitige Lager 9 einen kleineren Durchmesser auf als das zweite, abtriebsseitige Lager 10. Dadurch kann die Verschraubung radial zwischen dem ersten Lager 9 und dem Hohlraddurchmesser angeordnet werden. Somit kann auf eine Verschraubung auf der Außenseite des Hohlrads 3 verzichtet werden. Der benötigte Bauraum im Außenumfang des Hohlrades 3 wird dadurch reduziert, wodurch wiederum ein größeres Hohlrad mit einer größeren Untersetzung möglich ist.

In dem dargestellten Ausführungsbeispiel ist die Durchgangsbohrung 18 in dem ersten Lagerflanschteil 12 hohlradseitig mit einem vergrößerten Durchmesser ausgeführt. Abtriebsseitige weist die Durchgangsbohrung einen geringeren Durchmesser auf. Dadurch ist in der Durchgangsbohrung 18 eine Schulter ausgebildet. Dadurch kann ein Schraubenkopf 21 axial innerhalb der Durchgangsbohrung 18 aufgenommen werden. Der Schraubenkopf 21 der Schraube 20 schließt daher im Wesentlichen axial bündig mit der hohlradseitigen Stirnseite 22 des Lagerflansches 11 ab und liegt an der Schulter in der Durchgangsbohrung 18 an. Hierdurch wird vermieden, dass zusätzlicher Bauraum für den Schraubenkopf 21 benötigt wird.

Vorzugsweise weist die mindestens eine Sacklochbohrung 19, bzw. jede Sacklochbohrung 19, ein Gewinde auf. Altemativ kann/können die Sacklochbohrung(en) 19 auch ohne Gewinde ausgeführt sein. In diesem Fall ist/sind die Schraube(n) 20 selbstfurchend ausgeführt.

Vorzugsweise ist in der Schnittstelle des zweigeteilten Lagerflansches 11, also zwischen dem ersten Lagerflanschteil 12 und dem zweiten Lagerflanschteil 13, eine Dichtung 23 angeordnet. Die Dichtung 23 ist im dargestellten Ausführungsbeispiel als O-Ring ausgeführt.

### Bezugszeichenliste

- 1: Planetengetriebe
- 2: Eingangswelle
- 3: Hohlrad
- 4: erste Getriebestufe
- 5: zweite Getriebestufe
- 6: Sonnenrad
- 7: Planetenrad
- 8: Abtriebswelle
- 9: erstes, hohlradseitiges Lager
- 10: zweites, abtriebsseitiges Lager
- 11: Lagerflansch
- 12: erstes, hohlradseitiges Lagerflanschteil
- 13: zweites, abtriebsseitiges Lagerflanschteil
- 14: erster, hohlradseitiger Lagersitz
- 15: zweiter, abtriebsseitiger Lagersitz
- 16: erste Schulter
- 17: zweite Schulter
- 18: Durchgangsbohrung
- 19: Sacklochbohrung
- 20: Schraube
- 21: Schraubenkopf
- 22: hohlradseitige Stirnseite des Lagerflansches
- 23: Dichtung
- 24: Getriebegehäuse

- M: zentrale Mittelachse des Planetengetriebes

## Patentansprüche

1. Planetengetriebe (1) umfassend ein Hohlrad (3), mindestens eine Getriebestufe (4, 5) sowie einen Lagerflansch (11) zur Lagerung einer Abtriebswelle (8), **dadurch gekennzeichnet, dass**
der Lagerflansch (11) mehrteilig ausgebildet ist und mindestens ein erstes, hohlradseitiges Lagerflanschteil (12) und ein zweites, abtriebsseitiges Lagerflanschteil (13) aufweist, wobei das erste, hohlradseitige Lagerflanschteil (12) einteilig mit dem Hohlrad (3) ausgebildet ist und das zweite, abtriebsseitige Lagerflanschteil (13) als separates Bauteil ausgebildet ist und drehfest mit dem ersten, hohlradseitigen Lagerflanschteil (12) verbunden ist.

2. Planetengetriebe (1) nach Anspruch 1, **dadurch gekennzeichnet, dass** das Hohlrad (3) gesintert ist.

3. Planetengetriebe (1) nach Anspruch 1 oder 2, **dadurch gekennzeichnet, dass** das erste, hohlradseitige Lagerflanschteil (12) und das zweite, abtriebsseitige Lagerflanschteil (13) mittels einer Verschraubung drehfest miteinander verbunden sind.

4. Planetengetriebe (1) nach mindestens einem der vorhergehenden Ansprüche, **dadurch gekennzeichnet, dass** in dem ersten, hohlradseitigen Lagerflanschteil (12) mindestens eine Durchgangsbohrung (18) ausgebildet ist und in dem zweiten, abtriebsseitigen Lagerflanschteil (13) mindestens eine zur Aufnahme einer Schraube (20) mit der Durchgangsbohrung (18) zusammenwirkende Sacklochbohrung (19) ausgebildet ist.

5. Planetengetriebe (1) nach mindestens einem der vorhergehenden Ansprüche, **dadurch gekennzeichnet, dass** der Lagerflansch (11) einen ersten, hohlradseitigen Lagersitz (14) und einen zweiten, abtriebsseitigen Lagersitz (15) aufweist, wobei der erste Lagersitz (14) und der zweite Lagersitz (15) in axialer Richtung der Abtriebswelle (8) beabstandet zueinander angeordnet sind.

6. Planetengetriebe (1) nach Anspruch 5, **dadurch gekennzeichnet, dass** der erste, hohlradseitige Lagersitz (14) in dem ersten, hohlradseitigen Lagerflanschteil (12) und in dem zweiten, abtriebsseitigen Lagerflanschteil (13) ausgebildet ist.

7. Planetengetriebe (1) nach einem der Ansprüche 5 oder 6, **dadurch gekennzeichnet, dass** der zweite, abtriebsseitige Lagersitz (15) in dem zweiten, abtriebsseitigen Lagerflanschteil (13) ausgebildet ist.

8. Planetengetriebe (1) nach einem der Ansprüche 5 bis 7, **dadurch gekennzeichnet, dass** an dem ersten, hohlradseitigen Lagersitz (14) ein erstes, hohlradseitiges Lager (9) für die Abtriebswelle (8) angeordnet ist und an dem zweiten, abtriebsseitigen Lagersitz (15) ein zweites, abtriebsseitiges Lager (10) für die Abtriebswelle (8) angeordnet ist, wobei das erste Lager (9) und das zweite Lager (10) so ausgebildet sind, dass insbesondere Radialkräfte durch das zweite, abtriebsseitige Lager (10) aufgenommen werden.

9. Planetengetriebe (1) nach Anspruch 8, **dadurch gekennzeichnet, dass** das erste, hohlradseitige Lager (9) einen kleineren Durchmesser aufweist als das zweite, abtriebsseitige Lager (10).

10. Planetengetriebe (1) nach mindestens einem der vorhergehenden Ansprüche, **dadurch gekennzeichnet, dass** das Planetengetriebe (1) mehrstufig ausgebildet ist und das Hohlrad (3) mindestens die ersten beiden abtriebsseitigen Getriebestufen (4, 5) überdeckt.

11. Planetengetriebe (1) nach mindestens einem der vorhergehenden Ansprüche, **dadurch gekennzeichnet, dass** das Hohlrad (3) einen Teil des Getriebegehäuses (24) ausbildet.

12. Planetengetriebe (1) nach einem der Ansprüche 4 bis 11, **dadurch gekennzeichnet, dass** die mindestens eine Durchgangsbohrung (18) in dem ersten, hohlradseitigen Lagerflanschteil (12) mit einer Stufe versehen ist, wobei die Durchgangsbohrung (18) hohlradseitig einen größeren Durchmesser aufweist.

13. Planetengetriebe (1) nach mindestens einem der vorhergehenden Ansprüche, **dadurch gekennzeichnet, dass** zwischen dem ersten, hohlradseitigen Lagerflanschteil (12) und dem zweiten, abtriebsseitigen Lagerflanschteil (13) eine Dichtung (23) angeordnet ist.

14. Planetengetriebe (1) nach mindestens einem der vorhergehenden Ansprüche, **dadurch gekennzeichnet, dass** das zweite, abtriebsseitige Lagerflanschteil (13) aus Aluminium ausgebildet ist.

15. Planetengetriebe (1) nach mindestens einem der vorhergehenden Ansprüche, **dadurch gekennzeichnet, dass** das erste, hohlradseitige Lagerflanschteil (12) und das zweite, abtriebsseitige Lagerflanschteil (13) mittels mindestens vier Schrauben (20), vorzugsweise mittels acht Schrauben (20), miteinander verschraubt sind.
